# EUROPEAN PATENT APPLICATION

(11) **EP 2 151 829 A1**
(43) Date of publication of application: **10.02.2010**
(21) Application number: 09167514.0
(22) Date of filing: 07.08.2009
(51) Int. Cl.: G21C 9/00, G21C 1/03

(54) **Heat exchange assembly, in particular for removing heat from a primary cooling fluid of a nuclear reactor**

(30) Priority: 07.08.2008 IT MI20081495
(71) Applicant: Ansaldo Nucleare S.p.A., Genova (IT)
(72) Inventor: Barucca, Luciana, 16154 Genova (IT)
(74) Representative: Jorio, Paolo

(57) **Abstract**

A heat exchange assembly (5), in particular for removing heat from a primary cooling fluid of a nuclear reactor, includes a heat exchanger (10) immersed at least partially in a low-pressure primary fluid (F1) and having a plurality of pressurized tubes (12) in which a high-pressure secondary fluid (F2) circulates for removing heat from the primary fluid; and a passive safety device (20) for limiting the discharge of secondary fluid (F2) in case of breaking of a tube (12); the device (20) includes a plurality of pairs of Venturi nozzles (21, 22) connected to respective tubes (12), each tube (12) being connected to a pair of Venturi nozzles (21, 22) arranged upstream and downstream of the heat exchanger (10), respectively, outside the primary flow (F1).

## Description

The present invention relates to a heat exchange assembly, in particular for removing heat from a primary cooling circuit of a pool-type nuclear reactor, provided with a passive safety device for limiting, in case of accidental breakage of a tube of the heat exchange assembly, the discharge of fluid from the tube.

The heat exchange assembly is preferably applied to a nuclear reactor, in particular a pool-type nuclear reactor with low-pressure primary cooling fluid, application to which reference will be made below by way of example only.

A so-called pool-type nuclear reactor, operating with low-pressure (not pressurized) primary cooling fluid, normally includes a main container (vessel), within which a core immersed in the primary fluid and one or more primary heat exchangers for removing heat from the primary fluid by means of a secondary fluid are accommodated.

The most common heat exchangers are tube bundle heat exchangers, i.e. formed by a plurality of heat exchanging tubes, in which a high-pressure fluid, e.g. water/steam circulates.

These exchangers suffer from the problem of a violent, large discharge of pressurized fluid in case of accidental breakage of a tube, and in particular in case of so-called guillotine-type breaks (i.e. in which the tube breaks into two segments and fluid is discharged from both segments).

The problem is particularly crucial in the nuclear reactor sector, because the discharge of secondary fluid may lead to major, sudden pressure variations within the reactor container.

A possible solution is represented by the use of valves.

For example, the same cut-off valves which are commonly present on inlet and outlet headers of the exchanger to allow maintenance interventions may be used. The actuation (manual or automatic) of these valves in case of breakage of the tube allows to cut off the heat exchanger, thus limiting the maximum discharge of fluid stored in the heat exchanger itself.

Valves to be installed on each tube of the exchanger may be used in order to further reduce the amount of fluid which may be discharged in case of breakage; in this case, the closing of the valve fitted on the broken tube allows to limit the total amount of discharged fluid to that stored in the tube concerned by the breakage only.

Solutions of this type however have the drawback of requiring an actuating system which controls the activation of the valves, and which may not be fully reliable.

Indeed, automatic actuating systems may be subject to malfunctions, while an intervention entrusted to an operator is subject to human error and may not be timely.

It is an object of the present invention to provide a heat exchange assembly, in particular for removing heat from a primary cooling fluid of a nuclear reactor (e.g. a pool-type nuclear reactor), which is free from the drawbacks of the prior art here illustrated; in particular, it is an object of the invention to provide a heat exchange assembly which, in case of breakage of a tube of the heat exchange assembly, allows the fluid flow discharged from the broken tube to be limited by making use only of a passive safety device, of simple, effective and reliable operation because capable of intervening to perform the required function only on the basis of physical laws, as a consequence of its particular conformation.

The present invention thus relates to a heat exchange assembly, in particular for removing heat from a primary cooling fluid of a nuclear reactor (e.g. a pool-type reactor), as defined in essential terms in accompanying claim 1 and, in its additional features, in the dependent claims.

The invention further relates to a nuclear reactor, in particular a pool-type nuclear reactor cooled by a low-pressure primary fluid, as defined in the accompanying claim 10.

In essence, the invention consists in providing each tube of the heat exchanger of the heat exchange assembly with an appropriately dimensioned Venturi nozzle, arranged upstream of the heat exchanger, and with a further safety passive element, e.g. a further Venturi nozzle, but also an element of different type, appropriately dimensioned and instead arranged downstream of the heat exchanger.

The term "passive safety element" indicates an element which performs its function only on the basis of physical laws and without requiring activation by a further (automatic or manual) actuating system.

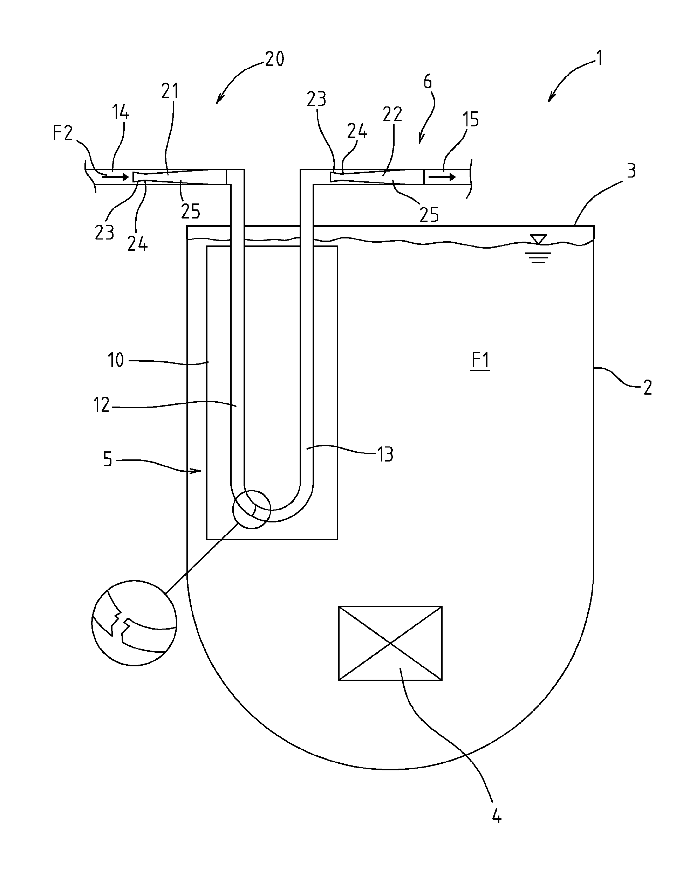

Further features and advantages of the present invention will be apparent from the description that follows of a preferred embodiment thereof, provided by way of non-limitative example and with reference to the accompanying drawing, which is a simplified, not in scale diagrammatic view of a pool-type nuclear reactor cooled by a low-pressure primary fluid, equipped with a heat exchange assembly according to the invention.

The accompanying figure diagrammatically shows by essential elements only (which are depicted not in scale) a pool-type nuclear reactor 1 cooled by a primary low-pressure fluid, e.g. liquid metal.

The reactor 1 comprises a main container 2 (not pressurized), superiorly closed by a roof 3 and containing a low-pressure primary fluid F1 for cooling a core 4, housed in the container 2 and immersed in the primary fluid F1; and at least one heat exchange assembly 5 for removing heat from the primary fluid F1 and transferring it outside the reactor 1 by means of a secondary fluid F2 circulating in a circuit 6.

Other functional components (known and not shown) of the reactor 1 are further accommodated in the container 2, such as, for example, conveying structures of the primary fluid F1, circulation pumps of the primary fluid F1, supporting structures of the core 4 and of the heat exchange assembly 5, residual power exchangers, fuel moving machines, core control systems 4, etcetera.

The primary fluid F1 is, for example, a liquid metal (e.g. lead), while the secondary fluid F2 is, for example, pressurized water which vaporizes after exchanging heat with the primary fluid.

A covering gas fills the space comprised between a free surface of the primary fluid F1 and the roof 3.

The assembly 5 comprises a heat exchanger 10, at least partially submerged in the primary fluid F1 and having a plurality of pressurized tubes 12 (only one of which is shown, for the sake of simplicity, in the accompanying figure), in which the high-pressure secondary fluid F2 circulates; hereinafter, as common understood by a person skilled in the art, the terms "high-pressure" and "low-pressure" referred to the primary fluid F1 and to the secondary fluid F2 respectively indicate that the pressure of the primary fluid F1 in the container 2 of the reactor 1 is lower, and in particular significantly lower, than the pressure of the secondary fluid F2 in the circuit 6, and specifically in the tubes 12 of the heat exchanger 10.

The heat exchanger 10 is, for example, a tube bundle exchanger, comprising a bundle of tubes 12, which may be arranged and shaped in different ways.

In the non-limitative example shown, the tubes 12 are essentially U-shaped, but it is understood that the tubes 12 may have different shapes.

Each tube 12 comprises at least one heat exchange portion 13 immersed in the primary fluid F1 which externally lap against the tubes 12. The tubes 12 are connected to respective inlet conduits 14 and outlet conduits 15 arranged upstream and downstream of the heat exchanger 10 outside the primary fluid F1, respectively.

The heat exchange assembly 5 further comprises a passive safety device 20 for limiting the discharge of secondary fluid F2 in case of breakage of a tube 12.

The device 20 includes a plurality of pairs of Venturi nozzles 21, 22 connected to respective tubes 12 and defining respective passive safety elements; each tube 12 is connected to a pair of Venturi nozzles 21, 22 arranged upstream and downstream of the heat exchanger 10, respectively, outside the primary fluid F1.

In particular, the Venturi nozzles 21, 22 are arranged outside the container 2, for example arranged within the inlet conduits 14 and the outlet conduits 15.

Each Venturi nozzle 21, 22 preferably has a substantially circular cross section and comprises, in the circulation way of the secondary fluid F2 in the circuit 6 (i.e. in each tube 12), a converging portion 23, a throat or narrowing 24, and a diverging portion 25.

In the converging portion 23, having an appropriate convergence angle α_{c}, the fluid-dynamic passage section area available for the secondary fluid F2 is reduced from the full section area of the tube 12 to a minimum value at the throat 24; in the diverging portion 25, having an appropriate divergence angle α_{d}, the fluid-dynamic passage section area then gradually increases from the minimum value to the full section area of the tube 12.

Each Venturi nozzle 21, 22 has an inlet section area and an outlet section area essentially equal and equal to a full section area of the tube segment in which it is inserted.

The Venturi nozzles 21, 22 are dimensioned in order to:
- limit the critical flow rate of the secondary fluid F2 in case of breakage of a tube 12;
- obtain a predetermined pressure drop in normal operating conditions of the heat exchange assembly 5 and the reactor 1.

Advantageously, the convergence angle α_{c} of the converging portion 23 is greater than the divergence angle α_{d} of the diverging portion 25, and the diverging portion 25 is longer than the converging portion 23.

By way of example, the convergence angle α_{c} is comprised between about 20° and about 50°, and preferably between about 30° and about 40°; the divergence angle α_{d} is comprised between about 5° and about 20° and preferably between about 7° and about 12°.

The Venturi nozzles 21, 22 connected to each tube 12 and arranged upstream and downstream of the heat exchanger 10, respectively, are not necessarily equal, but may be (and indeed generally are) different from one another; the Venturi nozzles 22 may have, for example, with respect to the Venturi nozzles 21, different through section area (cross section at the throat 24), different convergence angle α_{c}, different divergence angle α_{d}, different length of the converging portion 23 and/or of the diverging portion 25, etcetera.

In particular, the Venturi nozzles 21, 22 are different from each other in applications in which the secondary fluid F2 circulating in the tubes 12 has significantly different features when it crosses the Venturi nozzles 21 and the Venturi nozzles 22, as indeed in the example described, wherein the secondary fluid F2 is pressurized water, which vaporizes in the heat exchanger 10; hence, water circulates through the Venturi nozzles 21, while steam circulates through the Venturi nozzles 22. In general, in these situations, the Venturi nozzles 22 have a larger throat section than the Venturi nozzles 21.

In normal conditions of operation of the reactor 1, and thus of the heat exchange assembly 5, the secondary fluid F2 (pressurized water) circulating in each tube 12 enters in the Venturi nozzle 21 arranged upstream of the heat exchanger 10 and accelerates along the converging portion 23 (by effect of the reduction of the fluid-dynamic passage section). The secondary fluid F2 reaches a maximum speed in the throat 24 and then decelerates in the diverging section 25 (by effect of the increase of fluid-dynamic passage section) to return to the nominal circuit speed in the tube 12.

The secondary fluid F2 then run through the heat exchange portion 13 of the tube 12 in the heat exchanger 10 and removes heat, by vaporizing, from the primary fluid F1 which circulates outside the tube 12; the secondary fluid F2 then exits from the heat exchanger 10 and circulates in the outlet conduit 15 through the Venturi nozzle 22.

The breakage, for example a guillotine-type breakage, of a tube 12 (diagrammatically shown in the enlarged detail in the figure) may cause a consistent discharge of secondary high-pressure fluid F2, which would be released into the primary, low-pressure fluid F1 with a consequent pressurization of the container 2 and large displacement wave of the primary fluid F1.

For each tube 12, at least the Venturi nozzle 21 arranged upstream of the heat exchanger 10, and preferably also the Venturi nozzle 22 arranged downstream of the heat exchanger 10, are shaped and dimensioned so as to provide, in case of breakage of the tube 12 with break immersed in the primary fluid F1, and as a function of the working pressure difference between the primary fluid F1 in the container 2 and the secondary fluid F2 in the tube (working pressure difference which is that which occurs in normal working conditions of the heat exchanger 10, and in general of the reactor 1), the smallest possible flow rate discharged in critical flow condition of the secondary fluid F2.

Since the discharge of secondary fluid F2 in the primary fluid F1 through the break is characterized by critical flow conditions (because the secondary fluid F2 circulates in the heat exchanger 10 at high pressure, while the primary fluid F1 in the container 2 is at low pressure), the secondary fluid F2 reaches sonic speed at the throat 24 and the critical flow rate depends only on enthalpy and pressure of the secondary fluid F2 upstream of the throat 24 and on the section area of the throat 24.

The presence of the Venturi nozzles 21, 22 in each tube 12 has the effect of reducing the critical flow rate of the discharged secondary fluid F2 (water/steam or only steam, according to the position of the break), thus limiting the pressurization of the container 2 and the excessive displacement motion of the primary fluid F1. Damage and/or undesired working conditions in the reaction 1 are thus avoided.

Therefore, the dimensioning of the Venturi nozzles 21, 22 allows the flow rate of the secondary fluid F2 discharged in case of breakage of a tube 12 to be limited to a value which can be tolerated without negative consequences.

An appropriate dimensioning of the Venturi nozzles 21, 22 also allows pressure drops of the secondary fluid F2 through the Venturi nozzles 21, 22 in normal working conditions to be limited.

The effect of limiting the discharge of secondary fluid F2 in case of breakage of a tube 12 is obtained only by virtue of physical principles and the use of appropriately arranged and dimensioned Venturi nozzles 21, 22, without the need for actuating systems which may give rise to malfunctions and/or untimely interventions.

Furthermore, the adoption of Venturi nozzles 21, 22 does not require any increase in size of the heat exchanger 10, nor gives rise to particular construction problems or significant increases of cost.

According to a variation (not shown), the Venturi nozzles 22 arranged downstream of the heat exchanger 10 are replaced by an equal number of passive safety elements of a different type, again connected to respective tubes 12 and again capable, by means of appropriate design and dimensioning, to carry out a function equivalent to that of the Venturi tubes 22 described above.

Therefore, in this variant, the device 20 includes a plurality of first passive safety elements 21, constituted by Venturi nozzles, connected to respective tubes 12 and arranged upstream of the heat exchanger 10 outside the primary flow F1, e.g. in the inlet conduits 14; and a plurality of second passive safety elements connected to respective tubes 12 and arranged downstream of the heat exchanger 10 outside the primary fluid F1, e.g. in the outlet conduits 15.

Finally, it is understood that further changes and variations may be made to the disclosure illustrated herein, without departing from the scope of the invention as defined in the appended claims.

## Claims

1. A heat exchange assembly (5), in particular for removing heat from a primary cooling fluid of a nuclear reactor, comprising a heat exchanger (10) immersed at least partially in a low-pressure primary fluid (F1) and having a plurality of pressurized tubes (12) in which a high-pressure secondary fluid (F2) circulates for removing heat from the primary fluid; and a passive safety device (20) for limiting the discharge of secondary fluid (F2) in case of breaking of a tube (12) and including a plurality of pairs of passive safety elements (21, 22) connected to respective tubes (12), each tube (12) being connected to a first passive safety element (21) and to a second passive safety element (22) arranged upstream and downstream of the heat exchanger (10), respectively, and outside of the primary fluid (F1); the assembly being **characterized in that** the first passive safety element (21) of each tube (12) consists of a first Venturi nozzle that is shaped and dimensioned so as to provide, in case of breaking of the tube (12) with a break immersed in the primary fluid (F1) and as a function of the working pressure difference between the secondary fluid (F2) in the tube (12) and the primary fluid (F1) outside the tube (12), the smallest possible flow rate discharged in critical flow condition of the secondary fluid (F2).

2. A heat exchange assembly according to claim 1, wherein the second passive safety elements (22) consist of respective second Venturi nozzles that are themselves shaped and dimensioned so as to provide, in case of breaking of the tube (12), the smallest possible flow-rate discharged in critical flow condition of the secondary fluid (F2).

3. A heat exchange assembly according to claim 2, wherein the second Venturi nozzles (22) are dimensioned differently than the first Venturi nozzles (21).

4. A heat exchange assembly according to one of the preceding claims, wherein each tube (12) is connected to an inlet conduit (14) and an outlet conduit (15) arranged upstream and downstream of the heat exchanger (10), respectively, and outside of the primary fluid (F1), and internally housing respective passive safety elements (21, 22).

5. A heat exchange assembly according to one of the preceding claims, wherein the primary fluid (F1) is contained in a container (2) and the Venturi nozzles (21, 22) are positioned outside the container (2).

6. A heat exchange assembly according to one of the preceding claims, wherein each Venturi nozzle (21, 22) comprises, in the circulation way of the secondary fluid (F2), a converging portion (23), a throat or narrowing (24), and a diverging portion (25).

7. A heat exchange assembly according to claim 6, wherein the diverging portion (25) is longer than the converging portion (23).

8. A heat exchange assembly according to one of the preceding claims, wherein each tube (12) is substantially U-shaped.

9. A heat exchange assembly according to one of the preceding claims, wherein the secondary fluid (F2) is pressurized water that vaporizes, as a consequence of heat exchange with the primary fluid (F1).

10. A nuclear reactor (1), in particular pool-type nuclear reactor cooled by a low-pressure primary fluid, comprising a main container (2) containing a low-pressure primary fluid (F1), a core (4) accommodated in the container (2) and at least a heat exchange assembly (5) for removing heat from the primary fluid by means of a secondary fluid (F2) circulating in a heat exchanger (10) immersed in the primary fluid; the reactor being **characterized in that** the heat exchange assembly (5) is a heat exchange assembly according to any of the preceding claims.

11. A reactor according to claim 10, wherein the passive safety elements (21, 22) are positioned outside the primary fluid (F1) and outside the main container (2) of the reactor.
